Europäisches Patentamt

European Patent Office

Office européen des brevets

(11) Veröffentlichungsnummer: **0 418 616 A2**

# EUROPÄISCHE PATENTANMELDUNG

(21) Anmeldenummer: 90116746.0

(22) Anmeldetag: 31.08.90

(51) Int. Cl.5: **A23L 1/236**, A23L 1/30, A23L 1/229

(30) Priorität: 20.09.89 DE 3931321

(43) Veröffentlichungstag der Anmeldung:
27.03.91 Patentblatt 91/13

(84) Benannte Vertragsstaaten:
BE CH DE FR GB IT LI NL

(71) Anmelder: DEUTSCHE HEFEWERKE GMBH
Postfach 1320
W-4370 Marl 1(DE)

(72) Erfinder: Lahmann, Jürgen
Rodsoll 45 b
W-2000 Hamburg 65(DE)
Erfinder: Chiu, Chung-Wai, Dr.
Tilsiter Strasse 2 d
W-2000 Hamburg 70(DE)

(54) Süssungsmittelzubereitung.

(57)
2.1 Süßungsmittel wie Süßstoffe und Zuckeraustauschstoffe werden zur Herstellung kalorienreduzierter Lebensmittel verwendet. Bei einer sehr hohen Süßkraft besitzen die Süßstoffe jedoch allgemein einen Bei- oder Nachgeschmack, der durch weitere Zusätze kaschiert werden muß.

2.2 Durch eine Kombination aus Süßungsmittel und Hefeextrakt wird eine Süße erzeugt, die der der Saccharose sehr ähnlich ist.

2.3 Süßung von Lebensmitteln

EP 0 418 616 A2

EP 0 418 616 A2

## SÜSSUNGSMITTELZUBEREITUNG

Die Erfindung betrifft Süßungsmittelzubereitungen auf der Basis von Süßungsmitteln sowie ihre Verwendung zum Süßen von kalorienreduzierten Lebensmitteln.

Zum Süßen von kalorienarmen Lebensmitteln oder von Lebensmitteln, die für Diabetiker geeignet sind, wird Zucker seit langem teilweise oder ganz durch synthetische Süßungsmittel ersetzt. Von den Zuckerersatzstoffen sind Süßstoffe wie Saccharin oder Cyclamat seit vielen Jahren bekannt. Ihre Süßkraft ist um ein Vielfaches höher als die der Saccharose. Bei allen Süßstoffen stört jedoch ein Bei- oder Nachgeschmack oder eine Geschmacksnote, die von der des natürlichen Zuckers abweicht.

Auf der anderen Seite stehen Zuckeraustauschstoffe, meist Zuckeralkohole wie Mannit oder Sorbit, deren Süßkraft jedoch nur etwa halb so groß ist wie die der Saccharose.

Um die Akzeptanz der mit Süßungsmitteln versetzten Lebensmittel zu verbessern, wurden Mischungen entwickelt, durch die ein saccharidähnlicher Geschmack erzeugt und durch die der unangenehme Geschmackscharakter der Süßungsmittel kaschiert werden sollen.

So wird nach DE-C-23 28 571 eine Kombination aus Aspartylphenylalaninmethylester und Stärkehydrolysat angegeben. Nach DE-C-26 28 294 soll eine Mischung aus dem Kaliumsalz von 3,4-Dihydro-6-methyl-1,2,3-oxathiazin-4-on-2,2-dioxid und mindestens einem weiteren Süßstoff einen verbesserten saccharidähnlichen Geschmack ergeben. In DE-A-34 41 862 werden Zubereitungen aus Zuckeraustauschmitteln und Süßstoffen vorgeschlagen. Schließlich kann man nach DE-C-25 56 109 den süßen Nachgeschmack von Aspartylphenylalaninmethylester durch Zusatz von Salzen unterdrücken.

Die genannten Mischungen führen jedoch immer noch nicht zu einem vollwertigen Ersatz von Saccharose. Besonders hinsichtlich des Geschmackscharakters sind noch Wünsche offen.

Es bestand daher die Aufgabe, Süßungsmittelzubereitungen zu entwickeln, die einen weiter verbesserten saccharidähnlichen Geschmack aufweisen.

Die Aufgabe wird erfindungsgemäß durch Süßungsmittelzubereitungen gelöst, die entsprechend Anspruch 1 mindestens ein Süßungsmittel und Hefeextrakt enthalten. Die Zubereitungen können darüber hinaus auch Füllstoffe aufweisen.

Unter Süßungsmittel werden Süßstoffe und Zuckeraustauschstoffe verstanden. Glucose und Saccharose sind im Sinne dieser Erfindung keine Süßungsmittel.

Vorzugsweise wird als Süßungsmittel mindestens ein Süßstoff verwendet. Geeignete Süßstoffe sind beispielsweise Saccharin-Natrium, Cyclamat, Aspartylphenylalaninmethylester oder 3,4-Dihydro-6-methyl-1,2,3-oxathiazin-4-on-2,2-dioxid-Kaliumsalz. Für die Süßungsmittelzubereitungen werden dabei die beiden letztgenannten Süßstof fe bevorzugt.

Als Süßungsmittel können auch Zuckeraustauschstoffe verwendet werden. Geeignet sind beispielsweise die Zuckeralkohole Mannit, Sorbit, Xylit, Maltit oder Lactit oder Mischungen aus α-D-Glucopyranosido-1,6-sorbit und α-D-Glucopyranosido-1,6-mannit und auch Fructose.

Die für die Süßungsmittelzubereitung benötigten löslichen Hefeextrakte können nach bekannten Verfahren durch Autolyse oder enzymatische oder chemische Hydrolyse von Hefen, wie zum Beispiel Bäcker-, Bier- oder Weinhefen, hergestellt werden. Dabei bevorzugt man Hefeextrakte mit einem 5′-Ribonucleotid-Gehalt von 0,5 bis 20 %, bezogen auf die Trockensubstanz. Produkte mit 5 bis 10 % 5′-Ribonucleotiden werden besonders bevorzugt. Dabei werden ganz besonders die Extrakte bevorzugt, in denen die 5′-Ribonucleotide überwiegend als Inosinmonophosphat (IMP) und Guanosinmonophosphat (GMP) vorliegen.

Die Hefeextrakte weisen vorzugsweise einen niedrigen Salzgehalt auf, der nicht mehr als 40 % betragen soll. Produkte mit einem Salzgehalt von 8 bis 20 % werden besonders bevorzugt.

Süßungsmittelzubereitungen, in denen auf 30 bis 75 Teile Süßungsmittel 70 bis 25 Teile Hefeextrakt kommen, werden bevorzugt.

Als Füllstoffe kommen vor allem Oligosaccharide, beispielsweise oligomere Stärkehydrolysate und deren Derivate, in Betracht. Weitere geeignete Füllstoffe sind unter anderem Galactomannane, Alginate, Cellulose, Celulosederivate sowie Pektine. Vorzugsweise werden polykondensierte Glucose mit überwiegend 1,6-Verknüpfungen, wie Polydextrose, und Stärkehydrolysate, wie Maltodextrin, eingesetzt.

Die erfindungsgemäßen Süßungsmittelzubereitungen eignen sich hervorragend zum Süßen von kalorienarmen oder kalorienreduzierten Lebensmitteln. Im besonderen können sie zum Süßen von Instantsaft-Getränken, Gebäcken, Süßspeisen und Süßigkeiten verwendet werden. Die Zubereitungen können dabei als solche zugesetzt werden. Man kann die Komponenten auch einzeln zusetzen, so daß die Süßungsmittelmischung erst im Endprodukt entsteht. Die zugesetzte Menge richtet sich danach, welche Süße im Lebensmittel erzielt werden soll. Dabei kann man auch über das Verhältnis von Süßungsmittel zu Hefeextrakt eine bestimmte Süßkraft einstellen. Die Süßungsmittelzubereitungen ergeben eine Süße, die der natürlichen Süße der Saccharose sehr nahe kommt. Die Zubereitungen führen in Lebensmitteln zu einer Süße, die von der der Saccharose kaum zu unterscheiden ist.

Die folgenden Beispiele sollen die Erfindung verdeutlichen. Dabei werden erfindungsgemäße Beispiele durch Zahlen und Vergleichsbeispiele durch Buchstaben gekennzeichnet.

Beispiele 1 bis 9, Vergleichsbeispiele A bis H

Lösungen von Süßungsmittelzubereitungen werden gegen eine 6%ige Saccharose-Lösung getestet.

Tabelle 1

| Beispiel | Süßungsmittel (a) % | Süßungsmittel (b) % | Hefeextrakt % | organoleptische Bewertung durch 10 Testpersonen |
|---|---|---|---|---|
| A | (1) 0,018 | - | - | angenehme Süße |
| 1 | | | (6) 0,020 | geschmacklich voller, besser als A, kommt der Saccharose näher |
| B | (1) 0,009 | (2) 0,009 | - | angenehm, ausgewogen |
| 2 | | | (6) 0,020 | geschmacklich besser als B, kommt der Saccharose am nächsten |
| C | (2) 0,009 | (3) 0,003 | - | starke Bitternote |
| 3 | | | (6) 0,020 | leichte Bitternote |
| D | (1) 0,009 | (3) 0,003 | - | starke Süßkraft, unterschwellig bitter |
| 4 | | | (6) 0,020 | wesentlich besser als 3, kommt 2 und damit auch der Saccharose sehr nahe |
| E | (3) 0,003 | (4) 0,045 | - | flach, künstlich, aufdringliche Süße |
| 5 | | | (6) 0,020 | voller, runder, der Saccharose ähnlicher |
| F | (1) 0,009 | (5) 0,162 | - | flach, künstlich |
| 6 | | | (6) 0,020 | voller, runder Charakter, der Saccharose ähnlicher |

EP 0 418 616 A2

Tabelle 1 - Fortsetzung

| Beispiel | Süßungsmittel (a) % | Süßungsmittel (b) % | Hefeextrakt % | organoleptische Bewertung durch 10 Testpersonen |
|---|---|---|---|---|
| G | (2) 0,009 | (5) 0,162 | - | Bitternote, künstlich |
| 7 | | | (6) 0,020 | Bitternote kaschiert, geschmacklich verbessert |
| H | (1) 0,009 | (4) 0,072 | - | angenehme Süße, nicht abgerundet |
| 8 | | | (6) 0,020 | besser als H, runder, voller |
| B | (1) 0,009 | (2) 0,009 | - | angenehm, ausgewogen |
| 9 | | | (7) 0,010 | besser als B, abgerundete Süße |

(1) Aspartylphenylalaninmethylester
(2) 3,4-Dihydro-6-methyl-1,2,3-oxathiazin-4-on-2,2-dioxid-Kaliumsalz
(3) Saccharin-Natrium
(4) Cyclamat
(5) Sorbit
(6) Hefeextrakt der mittleren Zusammensetzung

95,0 % Trockensubstanz
55,0 % Protein
12,0 % NaCl
5,0 % 5'-Ribonucleotid-Gehalt (gesamt)
1,3 % GMP
1,3 % IMP
(KRIT, Fa. Ohly, D-4370 Marl)

(7) Hefeextrakt der mittleren Zusammensetzung

95,0 % Trockensubstanz
71,0 % Protein
1,0 % NaCl
(KAT, Fa. Ohly, D-4370 Marl)

Beispiel 10

Einsatz in einem Toastbrot

Verwendung eines Standardteiges mit 5 % Süßungsmittelzubereitung, bezogen auf den Mehlanteil, in folgender Zusammensetzung:

| Hefeextrakt (6) von Tabelle 1 | 10,0 % |
|---|---|
| Süßstoff (1) von Tabelle 1 | 0,6 % |
| Süßstoff (2) von Tabelle 1 | 0,4 % |
| Polydextrose | 89,0 % |
| | 100,0 % |

Verkostet wird gegen ein Brot ohne Hefeextrakt und ein Brot, hergestellt mit einem Standardteig mit 12,5 % Saccharose, bezogen auf den Mehlanteil.

Ergebnis:

(a) mit Saccharose : typischer Toastbrotcharakter
(b) mit Süßungsmitteln ohne Hefeextrakt : einseitige künstliche Süße, leichte untypische Bitternote
(c) mit Süßungsmitteln und Hefeextrakt : voller, runder Süßecharakter, sehr zuckerähnlich, wesentlich besser als Standardteig mit Süßungsmitteln ohne Hefeextrakt

Beispiel 11

Einsatz in einem Mürbteiggebäck

Verwendung einer Standardrezeptur für Mürbteiggebäck mit 10 % Süßungsmittelzubereitung, bezogen auf den Mehlanteil, in folgender Zusammensetzung:

| Hefeextrakt (6) von Tabelle 1 | 5,2 % |
|---|---|
| Süßstoff (1) von Tabelle 1 | 3,2 % |
| Polydextrose | 91,6 % |
| | 100,0 % |

Verkostet wird gegen ein Produkt ohne Hefeextrakt mit ansonsten gleicher Rezeptur und einem Mürbteiggebäck (Standardrezeptur) mit 35 % Saccharose, bezogen auf den Mehlanteil.

Ergebnis:

(a) mit Saccharose : typische Gebäcksüße
(b) mit Süßstoff ohne Hefeextrakt : unangenehme Süßespitze, leichter Bittercharakter, Gesamteindruck sehr flach
(c) mit Süßstoff und Hefeextrakt : runder, voller, angenehmer Süßegeschmack, wesentlich besser als mit Süßstoff ohne Hefeextrakt, auch organoleptisch besser als (a)

Beispiel 12

Einsatz in einem Instant-Saftgetränk

| Instant-Saftgetränkepulver nach folgender Rezeptur: | |
|---|---|
| Hefeextrakt (6) von Tabelle 1 | 1,30 % |
| Süßstoff (1) von Tabelle 1 | 2,00 % |
| Fructose | 53,70 % |
| Maltodextrin | 5,10 % |
| Säuerungsmittel | 25,25 % |
| Verdickungsmittel | 0,80 % |
| Trübungsmittel | 0,65 % |
| Geschmacksstoffe | 11,20 % |
| | 100,00 % |

Die Dosierung beträgt 7,0 g Instant-Saftgetränkepulver auf 300 ml Wasser.

Die Verkostungen werden gegen ein ohne Hefeextrakt hergestelltes Produkt durchgeführt.

Ergebnis:

(a) mit Süßstoff ohne Hefeextrakt : einseitig, unangenehm süß
(b) mit Süßstoff und Hefeextrakt : natürlicher, fruchtähnlicher Süßecharakter

Beispiel 13

Einsatz in einem Instant-Puddingpulver

| Instant-Puddingpulver nach folgender Rezeptur: | |
|---|---|
| Hefeextrakt (6) von Tabelle 1 | 0,30 % |
| Süßstoff (1) von Tabelle 1 | 0,40 % |
| Polydextrose | 50,00 % |
| Maltodextrin | 23,50 % |
| modifizierte Stärke | 22,00 % |
| Verdickungsmittel | 0,50 % |
| Stabilisatoren | 2,70 % |
| LM-Farbstoffe | 0,05 % |
| Geschmacksstoffe | 0,55 % |
| | 100,00 % |

80 g dieser Trockenmischung werden mit 500 ml kalter Milch zu einem Pudding verrührt.

Das Fertigprodukt wird gegen eine ohne Hefeextrakt hergestellte Probe verkostet.

Ergebnis:

(a) mit Süßstoff ohne Hefeextrakt : einseitig süß, flach, unnatürlich
(b) mit Süßstoff und Hefeextrakt : voller, runder, cremiger Gesamtcharakter, angenehme, zuckerähnliche Süße

**Ansprüche**

7

1. Süßungsmittelzubereitung, enthaltend 5 bis 95 Teile mindestens eines Süßungsmittels und 95 bis 5 Teile Hefeextrakt.

2. Zubereitung nach Anspruch 1, enthaltend 30 bis 75 Teile mindestens eines Süßungsmittels und 70 bis 25 Teile Hefeextrakt.

3. Zubereitung nach Anspruch 1,
dadurch gekennzeichnet,
daß als Süßungsmittel mindestens ein Süßstoff enthalten ist.

4. Zubereitung nach Anspruch 3,
dadurch gekennzeichnet,
daß Aspartylphenylalaninmethylester und/oder 3,4-Dihydro-6-methyl-1,2,3-oxathiazin-4-on-2,2-dioxid-Kaliumsalz enthalten ist.

5. Zubereitung nach Anspruch 1,
dadurch gekennzeichnet,
daß der Hefeextrakt einen 5′-Ribonucleotid-Gehalt von 0,5 bis 20 % aufweist.

6. Zubereitung nach Anspruch 1,
dadurch gekennzeichnet,
daß der Hefeextrakt einen Salzgehalt von bis zu 40 %, vorzugsweise von 8 bis 20 %, aufweist.

7. Zubereitung nach Anspruch 1,
dadurch gekennzeichnet,
daß sie zusätzlich Füllstoffe enthält.

8. Zubereitung nach Anspruch 7,
dadurch gekennzeichnet,
daß der Füllstoff aus polykondensierter Glucose mit überwiegend 1,6-Verknüpfungen und/oder Stärkehydrolysaten besteht.

9. Verwendung der Süßungsmittelzubereitung gemäß Anspruch 1 zum Süßen von kalorienarmen und kalorienreduzierten Lebensmitteln.